(19) Europäisches Patentamt / European Patent Office / Office européen des brevets

(11) **EP 2 608 441 B1**

(12) **FASCICULE DE BREVET EUROPEEN**

(45) Date de publication et mention
de la délivrance du brevet:
**18.11.2015 Bulletin 2015/47**

(51) Int Cl.:
***H04L 1/18*** *(2006.01)*

(21) Numéro de dépôt: **12197443.0**

(22) Date de dépôt: **17.12.2012**

(54) **Procédé de retransmission de paquets fragmentes avec crédit de retransmission global**

Verfahren zur Sendungswiederholung von fragmentierten Paketen mit gesamten Wiederübertragungskredit

Method for retransmitting fragmented packets with global retransmission credit

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **20.12.2011 FR 1103948**

(43) Date de publication de la demande:
**26.06.2013 Bulletin 2013/26**

(73) Titulaire: **THALES**
**92400 Courbevoie (FR)**

(72) Inventeurs:
• **Marcille, Sébastien**
**92622 GENNEVILLIERS Cedex (FR)**
• **Le Martret, Christophe**
**92622 GENNEVILLIERS Cedex (FR)**
• **Ciblat, Philippe**
**75013 PARIS (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
EP-A2- 1 677 449        WO-A2-2008/077909
US-A1- 2006 209 837

• **SEBASTIEN MARCILLE ET AL: "Performance computation of cross-layer Hybrid ARQ schemes at IP layer in the presence of corrupted acknowledgments", CROSS LAYER DESIGN (IWCLD), 2011 THIRD INTERNATIONAL WORKSHOP ON, IEEE, 30 novembre 2011 (2011-11-30), pages 1-5, XP032088203, DOI: 10.1109/IWCLD.2011.6123075 ISBN: 978-1-4577-1568-6**
• **AUDE LE DUC ET AL: "Analysis of a Cross-Layer Hybrid-ARQ Scheme: Application to Unequal Packet Protection", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 juin 2011 (2011-06-05), pages 1-5, XP031908273, DOI: 10.1109/ICC.2011.5962507 ISBN: 978-1-61284-232-5**

**Description**

La présente invention concerne le domaine des communications numériques et plus précisément celui de la transmission de données sous forme de paquets fragmentés. L'invention porte sur un procédé de retransmission de paquets fragmentés adapté pour améliorer les performances de taux d'erreur notamment dans le cas où la voie de transmission, aller comme retour, est soumise à des perturbations qui peuvent engendrer des erreurs sur les paquets transmis. L'invention s'applique avantageusement aux réseaux de communication utilisant le protocole IP et qui comportent au moins une liaison sans fil.

L'invention est avantageusement mise en oeuvre au niveau de la couche MAC (« Medium Access Layer ») du modèle OSI (« Open Systems Interconnection ») dans laquelle un processus de fragmentation est mis en oeuvre pour générer des paquets MPDU (« Mac Protocol Data Unit ») ou plus généralement PDU (« Protocol Data Unit ») de taille fixe à partir d'un paquet MSDU (« Mac Service Data Unit ») ou plus généralement SDU (« Service Data Unit ») provenant des couches supérieures et ayant une taille variable. La fragmentation permet une adaptation de la taille des paquets IP à transmettre entre la couche MAC et les couches supérieures.

La demande de brevet internationale du Demandeur publiée sous le numéro WO 2008/077909 décrit un procédé de retransmission à redondance incrémentale pour des paquets fragmentés.

Le principe décrit dans cette demande consiste à affecter un crédit global de retransmission à un paquet IP pour acheminer correctement l'ensemble des fragments associés à ce paquet avec un délai de transmission donné.

Un inconvénient de cette solution est qu'elle est fortement sensible aux erreurs liées aux fluctuations du canal de propagation en particulier pour la voie de retour. En effet la méthode de retransmission décrite est basée sur l'hypothèse d'une réception correcte des acquittements émis par le récepteur ce qui n'est pas toujours le cas lorsque le canal de propagation est perturbé.

Un autre inconvénient de cette solution est qu'elle engendre une protection aux erreurs inégale pour tous les fragments d'un paquet IP. En affectant un crédit global de retransmission pour tous les fragments d'un même paquet IP, le premier fragment transmis présente une probabilité d'erreur beaucoup plus faible que les fragments suivants.

Cette répartition inégale des probabilités de transmission incorrecte d'un fragment n'est pas toujours souhaitée.

On connaît également les solutions décrites dans le document "Performance computation of cross-layer hybrid ARQ schemes at IP layer in the presence of corrupted acknowledgments", Sebastien Marcille et al, dans le document "Analysis of a cross-layer hybrid-ARQ scheme: application to unequal packet protection", Aude Le Duc et al, dans la demande de brevet européen EP 1677 449 et dans la demande de brevet américaine US 2006/209837. Ces solutions sont basées sur les mêmes principes que celle décrite dans WO 2008/077909 et présentent les mêmes inconvénients.

L'invention permet de supprimer les inconvénients précités en améliorant significativement les performances en taux de paquets non transmis et en permettant de configurer la distribution des probabilités d'erreur des fragments d'un paquet IP.

L'invention est décrite par la suite dans le contexte du protocole IP mais elle s'applique de façon identique à tout paquet à transmettre issu d'un processus de fragmentation d'un paquet de données de taille plus grande.

L'invention a pour objet un procédé de retransmission de paquets fragmentés entre un émetteur et un récepteur, lesdits paquets fragmentés étant obtenus par fragmentation d'un paquet de données à transmettre, ledit procédé étant **caractérisé en ce** qu'il comprend au moins les étapes suivantes, pour chaque paquet fragmenté :

- Affecter une persistance $P(i)$ de transmission à chaque paquet fragmenté, de sorte que la somme des persistances sur l'ensemble desdits paquets fragmentés issus d'un paquet de données est égale à un coût global prédéterminé de transmission dudit paquet de données et que la persistance $P(1)$ affectée au premier paquet fragmenté PDU(1) est strictement inférieure audit coût global (C),
- Ajouter un code détecteur d'erreurs CRC à chaque paquet fragmenté,
- Incrémenter un compteur de crédit de transmission $c(i)$ et transmettre ledit paquet fragmenté au récepteur,
- Sur réception d'un acquittement positif de réception dudit paquet fragmenté, transférer le crédit de transmission restant $P(i)-c(i)$ au paquet fragmenté suivant : $P(i+1)=P(i+1) + P(i)-c(i)$,
- Sur réception d'un acquittement négatif de non réception dudit paquet fragmenté ou si aucun acquittement n'est reçu au bout d'un délai prédéterminé :

  - Si le compteur de crédit de transmission $c(i)$ est strictement inférieur à la persistance $P(i)$, retransmettre ledit paquet fragmenté et incrémenter ledit compteur de crédit de transmission $c(i)$,
  - Dans le cas contraire, conclure à l'échec de la transmission dudit paquet fragmenté.

Selon un aspect particulier de l'invention, la distribution des persistances $P(i)$ affectées à l'ensemble desdits paquets fragmentés PDU(i) est sélectionnée, parmi l'ensemble des distributions possibles, pour obtenir une probabilité d'erreur de transmission du paquet de données SDU la plus proche d'une probabilité d'erreur donnée $PER_{IP}$.

Selon un aspect particulier de l'invention, l'ensemble des persistances P(i) affectées à chaque paquet fragmenté est configuré de sorte à privilégier la transmission correcte d'un paquet fragmenté particulier.

Dans une variante de réalisation de l'invention, la persistance P(i) est identique pour chaque paquet fragmenté.

Dans une variante de réalisation de l'invention, un code correcteur d'erreur est ajouté à chaque paquet fragmenté.

Dans une variante de réalisation de l'invention, le paquet de données est un paquet IP et les paquets fragmentés transmis sont des paquets MAC.

L'invention a également pour objet un émetteur de paquets de données comprenant des moyens adaptés à mettre en oeuvre le procédé de retransmission selon l'invention.

L'invention a encore pour objet un système de transmission de données comprenant un émetteur selon l'invention et un récepteur adapté à recevoir un paquet fragmenté, contrôler son intégrité et transmettre à l'émetteur un acquittement positif si ledit paquet fragmenté est correct et un acquittement négatif si ledit paquet fragmenté est corrompu.

L'invention a encore pour objet un programme d'ordinateur comportant des instructions pour l'exécution du procédé de retransmission selon l'invention, lorsque le programme est exécuté par un processeur ainsi qu'un support d'enregistrement lisible par un processeur sur lequel est enregistré un programme comportant des instructions pour l'exécution du procédé selon l'invention, lorsque le programme est exécuté par un processeur.

D'autres caractéristiques et avantages de l'invention apparaîtront à l'aide de la description qui suit faite en regard de dessins annexés qui représentent :

- la figure 1, un synoptique d'un système émetteur-récepteur adapté à mettre en oeuvre un procédé de retransmission de paquets fragmentés,
- la figure 2, un organigramme décrivant un procédé de retransmission de paquets fragmentés selon l'art antérieur,
- la figure 3, un organigramme décrivant le procédé de retransmission de paquets fragmentés selon l'invention,
- la figure 4a, un schéma illustrant sur un exemple, le fonctionnement du procédé selon l'art antérieur dans le cas où la voie de retour est supposée parfaite,
- la figure 4b, un schéma illustrant sur le même exemple qu'à la figure 4a, le fonctionnement du procédé selon l'invention dans le cas où la voie de retour est supposée parfaite,
- la figure 5a, un schéma illustrant sur un exemple, le fonctionnement du procédé selon l'art antérieur dans le cas où la voie de retour n'est pas parfaite,
- la figure 5b, un schéma illustrant sur le même exemple qu'à la figure 5a, le fonctionnement du procédé selon l'invention dans le cas où la voie de retour n'est pas parfaite,
- la figure 6, un diagramme illustrant les performances comparatives du procédé selon l'art antérieur et selon l'invention en fonction du rapport signal à bruit du canal de transmission,
- les figures 7a,7b et 7c, trois diagrammes illustrant les performances comparatives du procédé selon l'art antérieur et selon l'invention, pour deux configurations différentes, en terme de distribution des probabilités de transmission correcte des fragments dans un paquet IP.

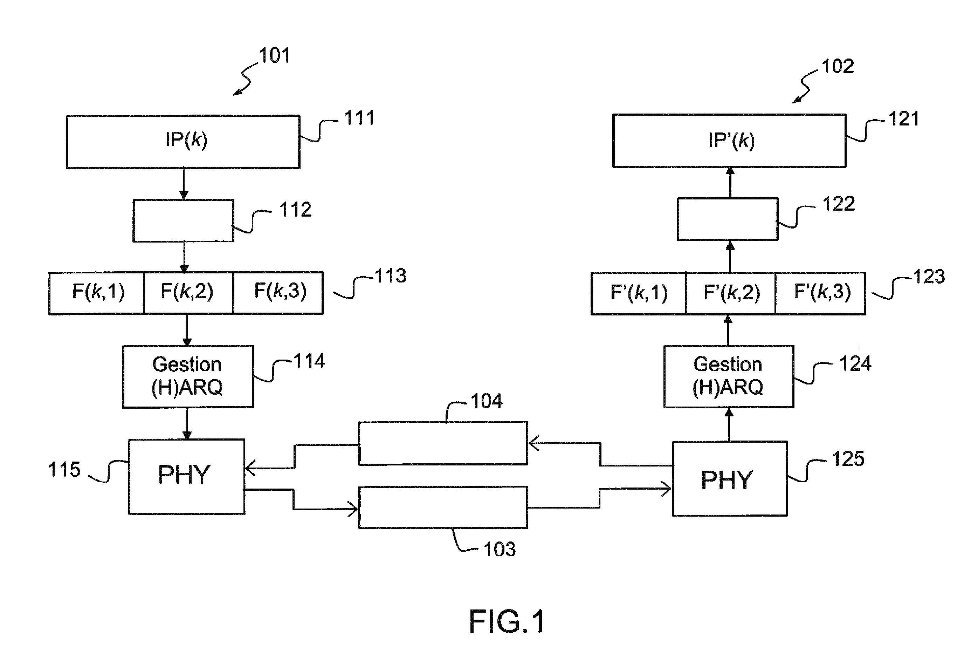

La figure 1 illustre, sur un synoptique, le fonctionnement global d'un système émetteur-récepteur adapté à la mise en oeuvre d'un procédé de retransmission de paquets fragmentés.

Un émetteur 101 et un récepteur 102 communiquent ensemble à travers un canal direct 103 et une voie de retour 104 subissant des variations importantes de leurs conditions de propagations. Par convention, le canal direct 103 est le canal de transmission permettant de transmettre un paquet de données de l'émetteur 101 vers le récepteur 102. La voie de retour 104 est le canal de transmission permettant de transmettre un acquittement du récepteur 102 vers l'émetteur 101.

L'émetteur 101 et le récepteur 102 implémentent chacun une pile logiciel réseau sous forme de couches conformes au modèle OSI. Notamment, ils comportent une couche réseau 111,121, une couche de segmentation et réassemblage 112,122, une couche d'accès au médium de transmission 113,123, une couche implémentant la gestion des retransmissions automatiques ou ARQ 114,124 et une couche physique 115,125. Un paquet IP à émettre à un instant donné, indicé par k, est segmenté en plusieurs fragments MAC F(k,1), F(k,2), F(k,3). Chaque fragment est émis une ou plusieurs fois selon la politique de retransmission choisie. Les fragments à émettre sont mis en forme pour transmission par la couche physique puis transmis sur le canal direct 103. Le récepteur 102 reçoit un fragment MAC et génère un acquittement, via la voie de retour 104, en fonction de la politique de retransmission choisie. Une fois tous les fragments F'(k,1), F'(k,2), F'(k,3) reçus, ils sont réassemblés pour reformer un paquet IP'(k).

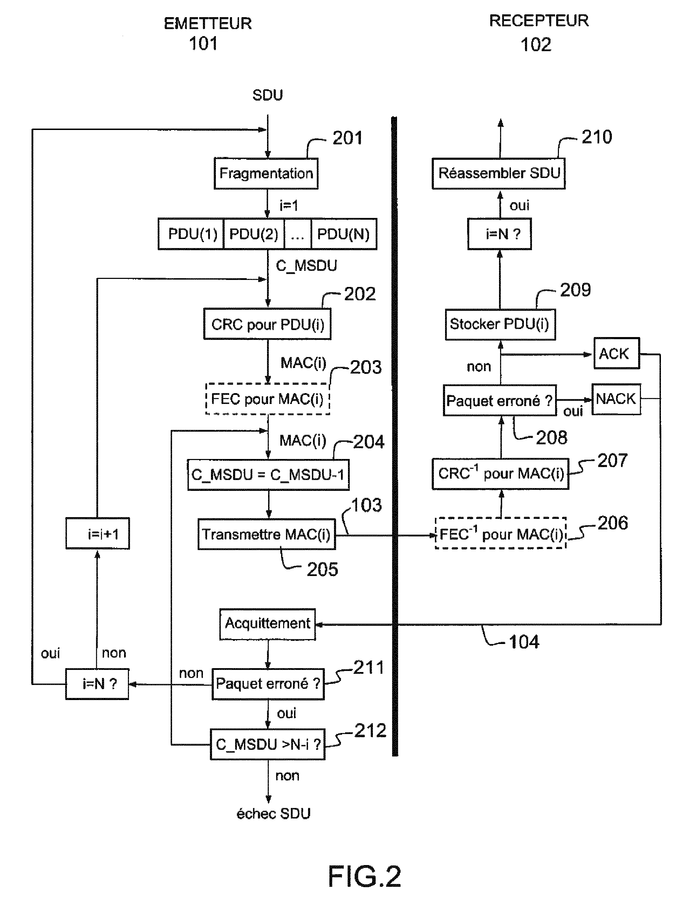

La figure 2 décrit sur un organigramme le procédé de retransmission de paquets fragmentés selon l'art antérieur décrit notamment dans la demande WO 2008/077909.

L'organigramme de la figure 2 schématise sur la gauche de la figure les traitements exécutés par l'émetteur 101 et sur la droite de la figure les traitements exécutés par le récepteur 102.

Un paquet de données SDU, par exemple un paquet IP, est transmis à une étape de fragmentation 201 qui segmente le paquet SDU en une pluralité de fragments PDU(i) pour i variant de 1 à N. Les fragments PDU(i) correspondent, par exemple, aux données encapsulées dans une trame MAC. Le procédé selon la figure 2 est configuré par un paramètre de crédit global de retransmission C_MSDU qui correspond au nombre de retransmissions maximum alloué pour réussir une transmission correcte des N fragments PDU(i) associés au paquet de données SDU. Un compteur de retransmission est initialisé au crédit global de retransmission C_MSDU. Pour chaque fragment PDU(i), un paquet MAC(i) est généré en ajoutant 202 un code détecteur d'erreur, par exemple un code de contrôle de redondance cyclique CRC. Optionnellement, le paquet MAC(i) créé peut être protégé 203 par un code correcteur d'erreur FEC dans le cadre d'un procédé de retransmission hybride. Le compteur de retransmission est décrémenté 204 puis le paquet MAC(i) est transmis via le canal de transmission 103.

Le récepteur 102 reçoit chaque paquet MAC(i), décode le code correcteur 206 éventuel puis le code de contrôle de redondance 207 afin de déterminer 208 si le paquet reçu est correct ou erroné. Dans le premier cas, un acquittement positif ACK est envoyé à l'émetteur 101 via la voie de retour 104. Dans le second cas, un acquittement négatif NACK est envoyé.

Si le paquet reçu est détecté comme étant correct, le fragment PDU(i) associé est stocké 209 en attendant de recevoir tous les fragments nécessaires au réassemblage 210 du paquet de données SDU.

Sur réception d'un acquittement, l'émetteur 101 vérifie 211 si celui-ci est négatif auquel cas, il compare le compteur de retransmission égal au crédit de retransmission restant avec le nombre de fragments N-i restant à transmettre. Si le crédit de retransmission restant est inférieur au nombre de fragments restant à transmettre, le procédé conclue à l'échec de la transmission du paquet de données SDU. Dans le cas contraire, le paquet MAC(i) associé à l'acquittement reçu est retransmis.

Si l'acquittement reçu 211 est positif, alors le fragment suivant PDU(i) est transmis jusqu'à transmission de l'ensemble des fragments constituant le paquet de données SDU.

Un inconvénient du procédé selon l'art antérieur décrit à la figure 2 est qu'il n'est pas suffisamment performant lorsque le canal de propagation présente des variations telles que plusieurs acquittements négatifs peuvent être reçus consécutivement pour un même paquet. Dans un tel cas, le crédit de retransmission global alloué pour un paquet de données SDU est fortement consommé pour le premier fragment à transmettre. La probabilité de réception correcte d'un fragment est donc inégale en fonction de la position de ce fragment dans le paquet de données SDU initial.

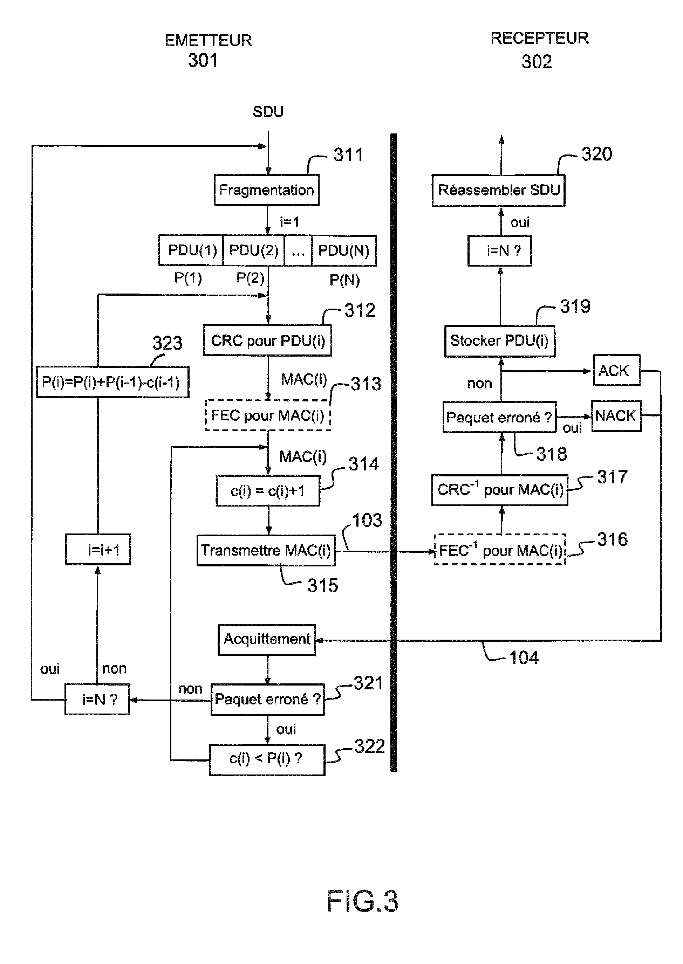

La figure 3 décrit sur un organigramme le procédé de retransmission de paquets fragmentés selon l'invention.

Au lieu d'allouer un crédit global de retransmission pour tous les fragments d'un paquet IP, l'invention consiste à attribuer une persistance de retransmission pour chaque fragment d'un même paquet IP. Lorsque le nombre de retransmissions nécessaire pour transmettre correctement un fragment est inférieur à la persistance allouée à ce fragment, le crédit de retransmission restant est réalloué au fragment suivant et ainsi de suite jusqu'au dernier fragment du paquet IP.

Le report de crédit de retransmission d'un fragment vers un autre permet de contrôler les probabilités d'échec de transmission de chaque fragment et d'améliorer les performances globales du mécanisme de retransmission lorsque le canal est fortement perturbé.

Le procédé consiste en l'exécution des étapes suivantes. L'organigramme de la figure 3 schématise sur la gauche de la figure les traitements exécutés par l'émetteur 301 et sur la droite de la figure les traitements exécutés par le récepteur 302.

Un paquet de données SDU, par exemple un paquet IP est transmis à une étape de fragmentation 311 qui segmente le paquet SDU en une pluralité de fragments PDU(i) pour i variant de 1 à N. Les fragments PDU(i) correspondent, par exemple, aux données encapsulées dans une trame MAC. Le procédé selon la figure 3 est configuré par un jeu de paramètres consistant en l'allocation d'une persistance P(i) pour chaque fragment PDU(i) d'un paquet IP. Un compteur de retransmission $c(i)$ est initialisé à zéro. Pour chaque fragment PDU(i), un paquet MAC(i) est généré en ajoutant 312 un code détecteur d'erreur, par exemple un code de contrôle de redondance cyclique CRC. Optionnellement, le paquet MAC(i) créé peut être protégé 313 par un code correcteur d'erreur FEC dans le cadre d'un procédé de retransmission hybride. Le compteur de retransmission $c(i)$ est incrémenté d'une unité 314 puis le paquet MAC(i) est transmis 315 sur le canal de transmission 103.

Le récepteur 302 reçoit chaque paquet MAC(i), décode le code correcteur 316 éventuel puis le code de contrôle de redondance 317 afin de déterminer 318 si le paquet reçu est correct ou erroné. Dans le premier cas, un acquittement positif ACK est envoyé à l'émetteur 301 via la voie de retour 104. Dans le second cas, un acquittement négatif NACK est envoyé.

Si le paquet reçu est détecté comme étant correct, le fragment PDU(i) associé est stocké 319 en attendant de recevoir tous les fragments nécessaires au réassemblage 320 du paquet de données SDU.

Sur réception d'un acquittement, l'émetteur 301 vérifie 321 si celui-ci est négatif auquel cas, il compare le compteur de retransmission $c(i)$ avec la persistance P(i) du fragment PDU(i). Si $c(i)$ est inférieur à P(i), alors le paquet MAC(i) associé à l'acquittement reçu est retransmis. Dans le cas contraire, le crédit de retransmission P(i) alloué au fragment PDU(i) est épuisé et le procédé est réitéré pour le fragment suivant.

Si l'acquittement reçu 321 est positif, alors le crédit de retransmission restant inutilisé pour le fragment PDU(i-1), égal à P(i-1)-c(i-1) est transféré 323 au fragment PDU(i) suivant. La persistance P(i) du fragment PDU(i) devient alors égale à P(i) + P(i-1) - c(i-1). De cette façon, le nombre de retransmissions maximum pour chaque fragment est géré de façon dynamique en fonction des acquittements reçus.

Si aucun acquittement n'est reçu au bout d'un délai prédéterminé, les étapes du procédé sont identiques à celles exécutées sur réception d'un acquittement négatif.

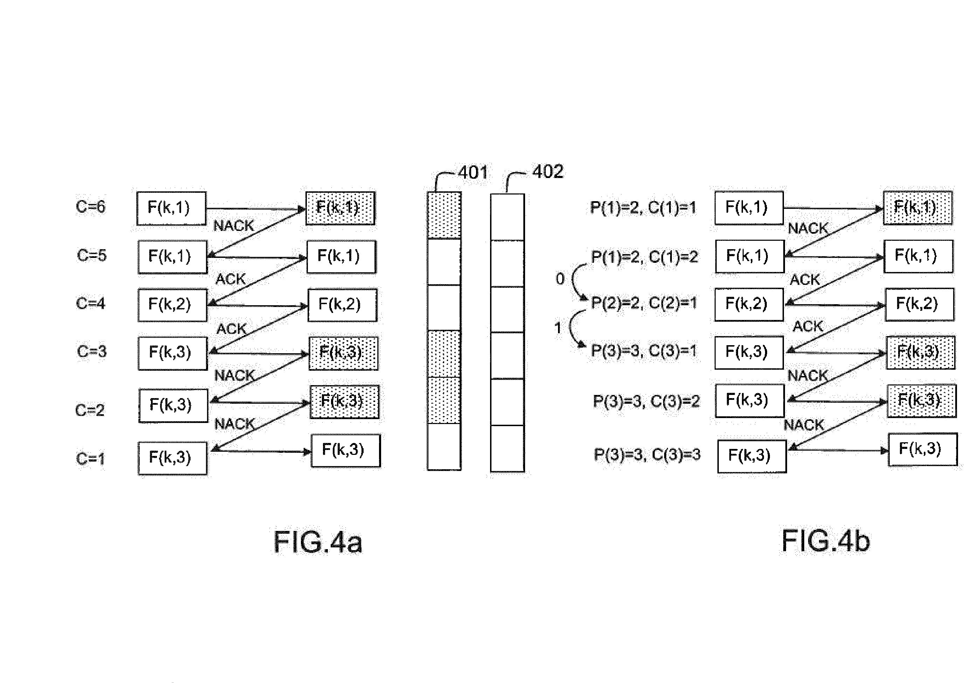

Les figures 4a et 4b illustrent sur un même exemple, le fonctionnement du procédé selon l'invention comparativement à celui du procédé selon l'art antérieur dans le cas où le canal de transmission de la voie de retour est supposé parfait.

Le canal direct 401 et la voie de retour 402 sont représentés, pour chaque paquet transmis, par un fond blanc si aucune erreur de transmission n'impacte le paquet et par un fond en pointillés dans le cas contraire.

L'exemple des figures 4a et 4b concernent la transmission d'un paquet IP IP(k) fragmenté en trois fragments F(k,1),F(k,2) et F(k,3).

Dans le cas de la solution de l'art antérieur, illustré à la figure 4a, le crédit total de retransmission alloué pour tous les fragments du paquet IP(k) à transmettre est pris égal à C_MSDU=6.

Le premier fragment F(k,1) transmis est corrompu par le canal 401, un acquittement négatif NACK est émis par le récepteur et reçu par l'émetteur qui retransmet alors le premier fragment F(k,1). Cette seconde transmission est correctement reçue par le récepteur qui émet un acquittement positif ACK lequel est reçu par l'émetteur qui valide la transmission correcte du premier fragment. Le second fragment F(k,2) est ensuite transmis, il est correctement reçu par le récepteur qui renvoie un acquittement positif ACK vers l'émetteur. Le troisième fragment F(k,3) est alors transmis et nécessite deux retransmissions pour être acheminé correctement vers le récepteur. La totalité du crédit de retransmission est ainsi consommée par le processus pour acheminer correctement l'intégralité du paquet IP(k).

La figure 4b illustre, sur le même exemple, le fonctionnement du procédé selon l'invention. Les persistances allouées à chaque fragment sont prises égales à 2 ce qui entraine un crédit de retransmission global au maximum égal à 6 comme dans le cas de la figure 4a.

Le premier fragment F(k,1) nécessite deux transmissions avant réception d'un acquittement positif donc le crédit maximum alloué au premier fragment est consommé. Aucun report de crédit n'est réalisé vers le deuxième fragment.

Le deuxième fragment F(k,2) ne nécessite qu'une seule transmission avant réception d'un acquittement positif donc le crédit alloué à ce fragment n'est pas intégralement consommé. Le crédit restant, égal ici à 1 retransmission, est reporté vers le troisième fragment.

Le troisième fragment bénéficie donc d'un crédit de retransmission égal à la persistance initialement allouée (égale à 2) à laquelle s'ajoute le report de crédit (égal à 1) du fragment précédent. Ainsi, trois retransmissions sont possibles pour le troisième fragment F(k,3) au lieu des deux initialement configurées.

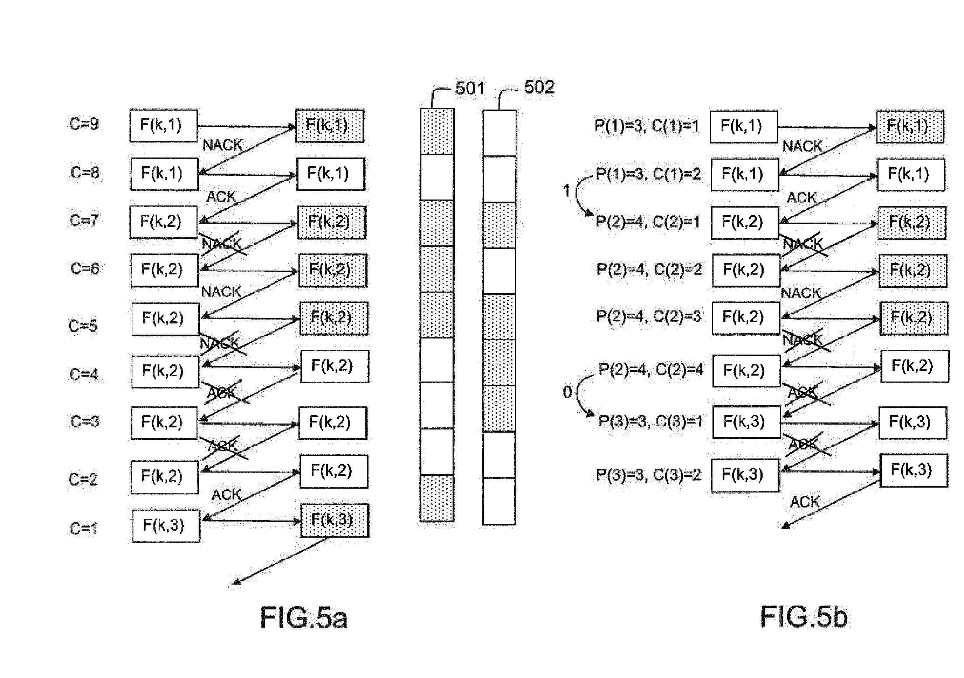

Les figures 5a et 5b illustrent sur un autre exemple, le fonctionnement du procédé selon l'invention comparativement à celui du procédé selon l'art antérieur dans le cas où le canal de transmission de la voie de retour est supposé imparfait.

Le canal direct 501 et la voie de retour 502 sont représentés, pour chaque paquet transmis, par un fond blanc si aucune erreur de transmission n'impacte le paquet et par un fond en pointillés dans le cas contraire.

L'exemple des figures 5a et 5b correspond à la transmission d'un paquet IP(k) fragmenté en trois fragments F(k,1),F(k,2) et F(k,3).

Dans le cas de la solution de l'art antérieur, illustré à la figure 5a, le crédit total de retransmission alloué pour tous les fragments du paquet IP(k) à transmettre est pris égal à C_MSDU=9.

Le premier fragment F(k,1) nécessite deux transmissions avant réception correcte d'un acquittement positif. Le deuxième fragment F(k,2) est corrompu lors de sa première transmission. L'acquittement négatif généré par le récepteur est lui-même corrompu lors de sa transmission sur la voie de retour 502. L'émetteur ne reçoit donc aucun acquittement (positif ou négatif) valide. Dans ce cas, il retransmet à nouveau le deuxième fragment F(k,2). Au total, le deuxième fragment F(k,2) nécessite six transmissions successives pour qu'il soit reçu correctement par le récepteur et que l'acquittement transmis par le récepteur soit reçu correctement par l'émetteur. Ainsi, le dernier fragment F(k,3) ne bénéficie plus que d'un seul crédit de transmission. Comme celui-ci est corrompu lors de son premier envoi et que la totalité du crédit alloué est épuisée, le procédé selon l'art antérieur aboutit à un échec de la transmission du dernier fragment et donc de l'intégralité du paquet IP(k).

Le procédé selon l'invention, illustré à la figure 5b sur le même exemple, permet de transmettre, pour la même configuration de canal, l'intégralité du paquet IP(k) dans un délai inférieur au délai total alloué.

Dans l'exemple de la figure 5b, la configuration des persistances est prise égale à 3 pour chaque fragment. Le premier fragment F(k,1) nécessite deux transmissions avant réception d'un acquittement positif valide, donc un report de crédit d'une unité est effectué vers le fragment suivant. Le deuxième fragment bénéficie donc d'un crédit de retransmission de 4 au lieu du crédit de 3 initialement alloué. Quatre retransmissions étant nécessaires pour transmettre correctement le deuxième fragment F(k,2) et recevoir un acquittement positif valide, le report de crédit est, dans cet exemple, indispensable pour assurer une transmission correcte du deuxième fragment. Le troisième fragment ne bénéficie d'aucun report de crédit mais deux transmissions seulement sont nécessaires pour une transmission correcte et un acquittement positif valablement reçu. Ainsi, le paquet IP(k) est intégralement transmis avec un cout global de transmission égal à 8 fragments transmis alors que la solution de l'art antérieur ne permet pas d'aboutir à une transmission correcte même avec un crédit global égal à 9.

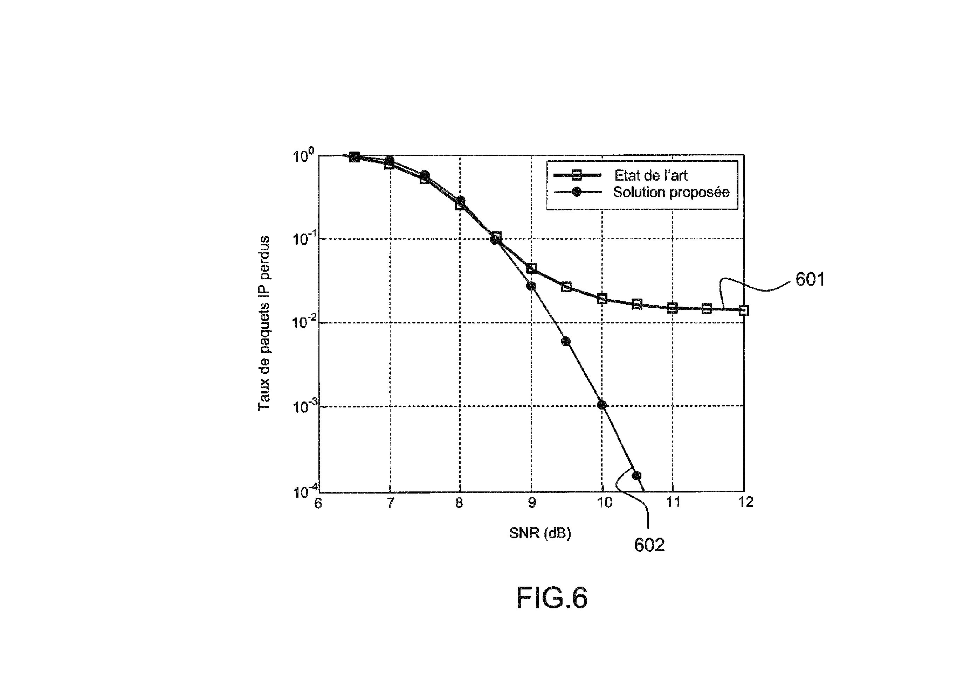

La figure 6 illustre, sur un diagramme, le taux de paquets IP non transmis en fonction du rapport signal à bruit, SNR, exprimé en décibels pour un canal de transmission de type bruit blanc Gaussien et un canal de retour imparfait. Chaque paquet IP est fragmenté en trois fragments comme dans les exemples précédents. La courbe 601 est relative au procédé de l'art antérieur pour un crédit global de transmission égal à 9. La courbe 602 est relative au procédé selon l'invention avec une répartition des persistances égale à 3 pour chacun des trois fragments du paquet IP à transmettre. La figure 6 illustre clairement le gain de performance pour des rapports signal à bruit supérieurs à 8,5 dB.

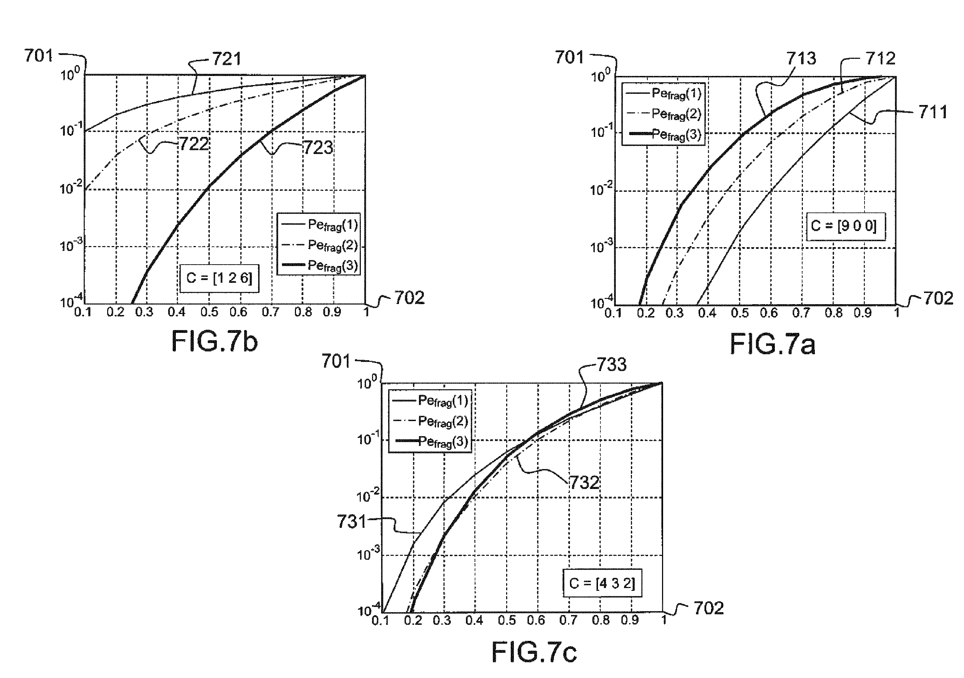

Les figures 7a,7b et 7c représentent trois diagrammes illustrant les performances comparatives du procédé selon l'art antérieur et selon l'invention, pour deux configurations différentes, en terme de distribution des probabilités de transmission correcte des fragments dans un paquet IP.

Le scénario de transmission est le même que pour les exemples précédents, à savoir que le paquet IP est fragmenté en 3 fragments transmis successivement.

Sur chacun des diagrammes est représentée la probabilité qu'un fragment ne soit pas correctement transmis en fonction du taux de pertes de paquets engendré par le canal de transmission.

La figure 7a concerne le cas d'une configuration des persistances de 9 pour le 1$^{er}$ fragment, 0 pour le 2$^{nd}$ fragment et 0 pour le 3eme fragment. Ce cas correspond à la solution de l'art antérieur pour laquelle un crédit global de 9 transmissions est alloué pour l'ensemble du paquet IP. Logiquement, la probabilité de transmission incorrecte du 1$^{er}$ fragment 711 est plus faible que celle du 2$^{nd}$ fragment 712 qui est elle-même plus faible que celle du 3$^{ème}$ fragment 713. Le 1$^{er}$ fragment est favorisé dans tous les cas, et le taux de non transmission du dernier fragment est élevé car le crédit de retransmission alloué au dernier fragment est dans tous les cas faible.

La figure 7b concerne le cas du procédé selon l'invention avec une configuration des persistances de 1 pour le 1$^{er}$ fragment, 2 pour le 2$^{nd}$ fragment et 6 pour le 3$^{ème}$ fragment. On remarque dans ce cas que l'ordre des courbes de probabilité est inversé. La probabilité de non transmission du 1$^{er}$ fragment 721 est la plus élevée suivie de celle du 2$^{nd}$ fragment 722. La probabilité associée au dernier fragment 723 est la plus faible et est même meilleure que dans le cas de la solution de l'art antérieur de la figure 7a. Cette configuration [1 2 6] est adaptée au cas où la transmission correcte du dernier fragment est privilégiée par rapport aux deux premiers fragments.

La figure 7c concerne le cas du procédé selon l'invention avec une configuration des persistances de 4 pour le 1$^{er}$ fragment, 3 pour le 2$^{nd}$ fragment et 2 pour le dernier fragment. Dans ce cas, les trois courbes de probabilité d'erreur relatives au 1$^{er}$ fragment 731, au 2$^{nd}$ fragment 732 et au 3eme fragment 733 sont sensiblement confondues ce qui entraine une meilleure uniformité des probabilités de transmission correcte de chaque fragment.

Le procédé selon l'invention est ainsi configuré par la persistance, ou nombre de retransmissions maximum initial, allouée à chaque fragment. Il convient de noter que, pour se démarquer de la solution de l'art antérieur consistant à affecter l'intégralité du cout de retransmission au 1$^{er}$ paquet, la persistance affectée au 1$^{er}$ paquet doit être strictement inférieur audit cout globale de retransmission.

La configuration de l'invention peut, par exemple, être effectuée de la manière suivante.

Une consigne de qualité de service PER$_{IP}$ correspondant au taux d'erreur sur les paquets IP au maximum acceptable pour le système est prédéterminée. Cette probabilité d'erreur sur les paquets IP, soumis au mécanisme de retransmission selon l'invention, peut être formulée selon la relation suivante :

$$PER_{IP} = 1 - \sum_{n=N}^{C} P_N(n)$$

où $P_N(n)$ est la probabilité de recevoir les N fragments d'un paquet IP en exactement n transmissions et C est le coût de transmission global pour le paquet IP. C est égal à la somme des persistances P(i) pour chaque fragment d'un même paquet IP.

$$C = \sum_{i=1}^{N} P(i)$$

La probabilité $P_N(n)$ peut être calculée par énumération des événements à l'aide de la relation suivante :

$$P_N(n) = f(P_{canal}, \Xi_{N,n})$$

où l'ensemble $\Xi_{N,n}((P(i))_{1 \le i \le N})$ donne la combinatoire associée à la technique décrite et dépend de la distribution initiale des crédits de transmission P(i), et $P_{canal}$ est la probabilité d'erreur d'un paquet transmis sur le canal.

La probabilité $P_{canal}$ étant supposée connue à l'émetteur, le crédit total C à utiliser pouvant être fixé par une contrainte de délai maximum, il est possible de calculer la probabilité d'erreur du paquet IP pour toutes les combinaisons possibles de répartition de valeurs de persistances P(i) pour chaque fragment d'un paquet IP. Le nombre de combinaisons possible est égal au nombre de combinaisons de N-1 parmi C-1 noté $\binom{C-1}{N-1}$.

La distribution des persistances P(i) pour i variant de 1 à N retenue est celle qui donne une probabilité d'erreur PER$_{IP}$ la plus proche de la consigne de qualité de service.

A titre d'exemples pour un coût de transmission maximum égal à C=7 et un nombre N=3 de fragments pour un paquet IP, l'ensemble $\Xi_{N,n}((P(i))_{1\leq i\leq N})$ associé à la distribution initiale [3 2 2] est égal à {{1,1,5},{1,2,4},{1,3,3},{1,4,2},{2,1,4},{2,2,3},{2,3,2},{3,1,3},{3,2,2}}. L'ensemble associé à la distribution initiale [2 2 3] est égal à {{1,1,5},{1,2,4},{1,3,3},{2,1,4},{2,2,3}}.

L'invention s'applique avantageusement pour tout système de communications mettant en oeuvre un mécanisme de fragmentation de paquets de données à transmettre sur un canal de transmission imparfait tel un canal sans fil. Elle s'applique notamment pour des protocoles réseau de type ARQ (Automatic Repeat reQuest) ou HARQ (Hybrid ARQ) et pour les standards 3GPP LTE et IEEE 802.16 (WiMAX).

Le procédé selon l'invention peut être mis en oeuvre par un logiciel réseau implémenté au niveau de la couche MAC d'une pile réseau. Dans un tel cas, le procédé selon l'invention peut être disponible en tant que produit programme d'ordinateur sur un support lisible par ordinateur.

## Revendications

**1.** Procédé de retransmission de paquets fragmentés (PDU(i)) entre un émetteur (101,301) et un récepteur (102,302), lesdits paquets fragmentés étant obtenus par fragmentation d'un paquet de données (SDU) à transmettre, ledit procédé étant **caractérisé en ce qu'il** comprend au moins les étapes suivantes, pour chaque paquet fragmenté (PDU(i)) :

• Affecter une persistance P(i) de transmission à chaque paquet fragmenté (PDU(i)), de sorte que la somme des persistances sur l'ensemble desdits paquets fragmentés issus d'un paquet de données (SDU) est égale à un coût global (C) prédéterminé de transmission dudit paquet de données (SDU) et que la persistance P(1) affectée au premier paquet fragmenté (PDU(1)) est strictement inférieure audit coût global (C)
• Ajouter (312) un code détecteur d'erreurs CRC à chaque paquet fragmenté (PDU(i)),
• Incrémenter (314) un compteur de crédit de transmission c(i), préalablement initialisé à 0, et transmettre (315) ledit paquet fragmenté (PDU(i)) au récepteur (102,302),
• Sur réception d'un acquittement positif (ACK) de réception dudit paquet fragmenté (PDU(i)), transférer (323) le crédit de transmission restant P(i)-c(i) au paquet fragmenté suivant (PDU(i+1)) : P(i+1)=P(i+1) + P(i)-c(i),
• Sur réception d'un acquittement négatif (NACK) de non réception dudit paquet fragmenté (PDU(i)) ou si aucun acquittement n'est reçu au bout d'un délai prédéterminé :

- Si le compteur de crédit de transmission c(i) est strictement inférieur à la persistance P(i), retransmettre ledit paquet fragmenté (PDU(i)) et incrémenter ledit compteur de crédit de transmission c(i),
- Dans le cas contraire, conclure à l'échec de la transmission dudit paquet fragmenté (PDU(i)).

**2.** Procédé de retransmission selon la revendication 1 **caractérisé en ce que**

• Une probabilité d'erreur de transmission du paquet de données (SDU) est calculée pour toutes les combinaisons possibles de répartition de valeurs de persistances P(i) et pour chaque paquet fragmenté (PDU(i)) à partir de la probabilité d'erreur ($P_{canal}$) d'un paquet fragmenté et du coût global (C),
• la distribution des persistances P(i) affectées à l'ensemble desdits paquets fragmentés (PDU(i)) est sélectionnée, parmi l'ensemble des distributions possibles, pour obtenir la probabilité d'erreur de transmission du paquet de données (SDU) la plus proche d'une probabilité d'erreur donnée ($PER_{IP}$).

**3.** Procédé de retransmission selon la revendication 1 **caractérisé en ce que** l'ensemble des persistances P(i) affectées à chaque paquet fragmenté (PDU(i)) est configuré de sorte à privilégier la transmission correcte d'un paquet fragmenté particulier.

**4.** Procédé de retransmission selon la revendication 1 **caractérisé en ce que** la persistance P(i) est identique pour chaque paquet fragmenté (PDU(i)).

**5.** Procédé de retransmission selon l'une des revendications précédentes **caractérisé en ce qu'**un code correcteur d'erreur (FEC) est ajouté (313) à chaque paquet fragmenté (PDU(i)).

**6.** Procédé de retransmission selon l'une des revendications précédentes **caractérisé en ce que** le paquet de données (SDU) est un paquet IP et les paquets fragmentés transmis sont des paquets MAC.

**7.** Emetteur (101,301) de paquets de données (SDU) comprenant des moyens adaptés à mettre en oeuvre le procédé de retransmission selon l'une des revendications 1 à 6.

**8.** Système de transmission de données comprenant un émetteur (101,301) selon la revendication 7 et un récepteur (102,302) adapté à recevoir un paquet fragmenté (PDU(i)), contrôler son intégrité (317) et transmettre à l'émetteur (101,301) un acquittement positif (ACK) si ledit paquet fragmenté est correct et un acquittement négatif (NACK) si ledit paquet fragmenté est corrompu.

9. Programme d'ordinateur comportant des instructions pour l'exécution du procédé de retransmission selon l'une quelconque des revendications 1 à 6, lorsque le programme est exécuté par un processeur.

10. Support d'enregistrement lisible par un processeur sur lequel est enregistré un programme comportant des instructions pour l'exécution du procédé de retransmission selon l'une quelconque des revendications 1 à 6, lorsque le programme est exécuté par un processeur.

**Patentansprüche**

1. Verfahren zum Neusenden von fragmentierten Paketen (PDU(i)) zwischen einem Sender (101, 301) und einem Empfänger (102, 302), wobei die fragmentierten Pakete durch Fragmentieren eines zu sendenden Datenpakets (SDU) erhalten werden, wobei das Verfahren **dadurch gekennzeichnet ist, dass** es für jedes fragmentierte Paket (PDU(i)) wenigstens die folgenden Schritte beinhaltet:

    • Zuordnen einer Sendepersistenz P(i) zu jedem fragmentierten Paket (PDU(i)), so dass die Summe der Persistenzen in Bezug auf die Gesamtheit aller von einem Datenpaket (SDU) kommenden fragmentierten Pakete gleich vorbestimmten Gesamtkosten (C) für das Senden des Datenpakets (SDU) ist und so dass die dem ersten fragmentieren Paket (PDU(1)) zugeordnete Persistenz P(1) strikt geringer ist als die Gesamtkosten (C);
    • Hinzufügen (312) eines Fehlerprüfcodes CRC zu jedem fragmentierten Paket (PDU(i));
    • Inkrementieren (314) eines Sendekreditzählers c(i), der zuvor auf 0 gesetzt wurde, und Senden (315) des fragmentierten Pakets (PDU(i)) zum Empfänger (102, 302);
    • Übertragen (323), nach dem Erhalt einer positiven Quittierung (ACK) des Empfangs des fragmentierten Pakets (PDU(i)), des verbleibenden Sendekredits P(i)-c(i) zum folgenden fragmentierten Paket (PDU(i+1)): P(i+1) = P(i+1) + P(i)-c(i);
    • nach dem Erhalt einer negativen Quittierung (NACK) des Nichtempfangs des fragmentierten Pakets (PDU(i)) oder wenn am Ende einer vorbestimmten Frist keine Quittierung empfangen wurde:

        - Neusenden, wenn der Sendekreditzähler c(i) strikt kleiner ist als die Persistenz P(i), des fragmentierten Pakets (PDU(i)) und Inkrementieren des Sendekreditzählers c(i);
        - andernfalls Schlussfolgern, dass das Senden des fragmentierten Pakets (PDU(i)) erfolglos war.

2. Neusendeverfahren nach Anspruch 1, **dadurch gekennzeichnet, dass**:

    • eine Wahrscheinlichkeit eines Fehlers beim Senden des Datenpakets (SDU) für alle möglichen Kombinationen der Verteilung von Persistenzwerten P(i) und für jedes fragmentierte Paket (PDU(i)) auf der Basis der Fehlerwahrscheinlichkeit ($P_{Kanal}$) in einem fragmentierten Paket und der Gesamtkosten (C) berechnet wird;
    • die Verteilung der allen fragmentierten Paketen (PDU(i)) zugeordneten Persistenzen P(i) aus allen möglichen Verteilungen so gewählt wird, dass die Wahrscheinlichkeit eines Fehlers beim Senden des Datenpakets (SDU) erhalten wird, die einer gegebenen Fehlerwahrscheinlichkeit ($PER_{IP}$) am nächsten liegt.

3. Neusendeverfahren nach Anspruch 1, **dadurch gekennzeichnet, dass** alle jedem fragmentierten Paket (PDU(i)) zugeordneten Persistenzen P(i) so konfiguriert sind, dass die korrekte Sendung eines bestimmten fragmentierten Pakets begünstigt wird.

4. Neusendeverfahren nach Anspruch 1, **dadurch gekennzeichnet, dass** die Persistenz P(i) für alle fragmentierten Pakete (PDU(i)) identisch ist.

5. Neusendeverfahren nach einem der vorherigen Ansprüche, **dadurch gekennzeichnet, dass** ein Fehlerkorrekturcode (FEC) zu jedem fragmentierten Paket (PDU(i)) hinzugefügt (313) wird.

6. Neusendeverfahren nach einem der vorherigen Ansprüche, **dadurch gekennzeichnet, dass** das Datenpaket (SDU) ein IP-Paket ist und die gesendeten fragmentierten Pakete MAC-Pakete sind.

7. Datenpaket-(SDU)-Sender (101, 301), der Mittel zum Ausführen des Neusendeverfahrens nach einem der Ansprüche 1 bis 6 umfasst.

8. Datensendesystem, das einen Sender (101, 301) nach Anspruch 7 und einen Empfänger (102, 302) zum Empfangen eines fragmentierten Pakets (PDU(i)), zum Kontrollieren seiner Integrität (317) und zum Senden einer positiven Quittierung (ACK), wenn das fragmentierte Paket korrekt ist, und einer negativen Quittierung (NACK), wenn das fragmentierte Paket verfälscht ist, zum Sender (101, 301) umfasst.

9. Computerprogramm, das Befehle zum Ausführen des Neusendeverfahrens nach einem der Ansprüche 1 bis 6 umfasst, wenn das Programm von einem Prozessor ausgeführt wird.

10. Prozessorlesbares Aufzeichnungsmedium, auf dem ein Programm aufgezeichnet ist, das Befehle zum Ausführen des Neusendeverfahrens nach einem der Ansprüche 1 bis 6 umfasst, wenn das Programm von einem Prozessor ausgeführt wird.

**Claims**

1. A method for retransmitting fragmented packets (PDU(i)) between a transmitter (101, 301) and a receiver (102, 302), said fragmented packets being obtained by fragmenting a data packet (SDU) to be transmitted, said method being **characterised in that**, for each fragmented packet (PDU(i)), it comprises at least the following steps:

   • assigning a persistence P(i) of transmission to each fragmented packet (PDU(i)) so that the sum of the persistences over all of said fragmented packets coming from a data packet (SDU) is equal to a predetermined overall cost (C) of transmitting said data packet (SDU) and so that the persistence P(1) assigned to the first fragmented packet (PDU(1)) is strictly less than said overall cost (C);
   • adding (312) an error detection code CRC to each fragmented packet (PDU(i));
   • incrementing (314) a transmission credit counter $c(i)$, previously set to 0, and transmitting (315) said fragmented packet (PDU(i)) to said receiver (102, 302);
   • transferring (323), on receipt of a positive acknowledgement (ACK) of receipt of said fragmented packet (PDU(i)), the remaining transmission credit P(i)-c(i) to the next fragmented packet (PDU(i+1)): P(i+1) = P(i+1) + P(i)-c(i);
   • upon receipt of a negative acknowledgement (NACK) of non-receipt of said fragmented packet (PDU(i)) or if no acknowledgement is received at the end of a predetermined time:

      - retransmitting, if said transmission credit counter $c(i)$ is strictly less than the persistence P(i), said fragmented packet (PDU(i)) and incrementing said transmission credit counter $c(i)$;
      - otherwise, inferring the failure of the transmission of said fragmented packet (PDU(i)).

2. The transmission method according to claim 1, **characterised in that**:

   • a probability of an error in the transmission of the data packet (SDU) is computed for all of the possible combinations of the distribution of values of persistences P(i) and for each fragmented packet (PDU(i)) on the basis of the probability of error ($P_{channel}$) in a fragmented packet and of the overall cost (C);
   • the distribution of the persistences P(i) assigned to all of said fragmented packets (PDU(i)) is selected from among all of the possible distributions so as to obtain the probability of an error in the transmission of the data packet (SDU) closest to a given probability error ($PER_{IP}$).

3. The retransmission method according to claim 1, **characterised in that** all of the persistences P(i) assigned to each fragmented packet (PDU(i)) are configured so as to favour the correct transmission of a specific fragmented packet.

4. The retransmission method according to claim 1, **characterised in that** the persistence P(i) is identical for each fragmented packet (PDU(i)).

5. The retransmission method according to any one of the preceding claims, **characterised in that** an error correction code (FEC) is added (313) to each fragmented packet (PDU(i)).

6. The retransmission method according to any one of the preceding claims, **characterised in that** said data packet (SDU) is an IP packet and the transmitted fragmented packets are MAC packets.

7. A data packet (SDU) transmitter (101, 301) comprising means adapted to implement the retransmission method according to any one of claims 1 to 6.

8. A data transmission system comprising a transmitter (101, 301) according to claim 7 and a receiver (102, 302) adapted to receive a fragmented packet (PDU(i)), to verify its integrity (317) and to transmit a positive acknowledgement (ACK) to said transmitter (101, 301) if said fragmented packet is correct and a negative acknowledgement (NACK) if said fragmented packet is corrupted.

9. A computer program comprising instructions for executing the retransmission method according to any one of claims 1 to 6 when said program is executed by a processor.

10. A processor-readable recording medium, on which a program is recorded that comprises instructions for executing the retransmission method according to any one of claims 1 to 6 when said program is executed by a processor.

FIG.1

FIG.2

EP 2 608 441 B1

EMETTEUR
301

RECEPTEUR
302

SDU

FIG.3

12

FIG.4a

FIG.4b

EP 2 608 441 B1

FIG.5a

FIG.5b

EP 2 608 441 B1

FIG.6

EP 2 608 441 B1

FIG.7a

FIG.7b

FIG.7c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008077909 A
- EP 1677449 A
- US 2006209837 A